# EUROPEAN PATENT SPECIFICATION

(11) **EP 3 448 746 B1**
(45) Date of publication and mention of the grant of the patent: **13.05.2020**
(21) Application number: 17731271.7
(22) Date of filing: 27.04.2017
(51) Int. Cl.: B62D 55/253, B62D 55/28, B62D 55/27, B62D 55/26

(54) **TRANSVERSE BAR FOR TRACKS OF SNOW GROOMERS**
QUERTRÄGER FÜR KETTEN VON PISTENRAUPEN
BARRE TRANSVERSALE POUR CHENILLES DE DAMEUSES

(30) Priority: 27.04.2016 IT UA20162940
(43) Date of publication of application: 06.03.2019
(73) Proprietor: PRINOTH S.p.A., 39049 Vipiteno (IT)
(72) Inventor: SPADONI, Riccardo, 41125 Modena (IT); MAURER, Gregor, 39049 Vipiteno (IT)
(74) Representative: Manconi, Stefano
(86) International application number: PCT/IB2017/052444
(87) International publication number: WO 2017/187382

(56) References cited:
- WO-A1-2006/069682
- WO-A1-2008/155423
- CH-A5- 692 497
- DE-A1- 2 920 132
- DE-C1- 10 053 695
- US-B1- 6 540 310

## Description

### TECHNICAL FIELD

The present invention relates to a transverse bar for tracks of snow groomers.

### BACKGROUND ART

In the field of preparation of ski slopes, it is known to provide a snow groomer comprising a support frame, a driver's cabin mounted centrally on the support frame, and two tracks mounted on opposite sides of said support frame.

Each track comprises a set of wheels rotatably mounted on the support frame; a plurality of belts looped around the wheels; and a plurality of transverse bars fixed to the belts transversely to the forward direction of the track and configured to allow the gripping of the track itself to the snow of the ski slope.

Each transverse bar comprises a section bar, which is normally made of steel, aluminium or aluminium alloy, has a contoured shape, and is bounded by an outer surface having a substantially triangular shape.

The outer surface comprises a fixing portion, which is substantially flat and arranged in contact with a number of belts, which depends on the length of the transverse bar, and two lateral sides which project from the fixing portion and converge with each other.

The transverse bar also has an inner cavity, which extends through the section bar transversely to the forward direction of the track and is laterally open at its free ends.

The transverse bar is covered with an outer covering, which is applied at least in the area of the two lateral sides, is normally made of aluminium or aluminium alloy, and is applied on the transverse bar to prevent the snow and/or ice from adhering to the transverse bar and improve the gripping capacity of the track to the ground.

The snow groomer is also equipped with a plurality of operating units, such as for example a milling cutter for processing the snow of the ski slopes, a shovel for moving snow masses along the ski slopes, and/or a winch assembly to ensure the stability of the snow groomer on relatively steep slopes and prevent slipping of the snow groomer if it loses adherence to the snow.

The known transverse bars for tracks of snow groomers of the type described above have a few drawbacks mainly resulting from the fact that the outer covering is subject to scratches and tears, and therefore has a relatively limited effectiveness. An example for a transverse bar for tracks of snow groomers is disclosed in WO 2008/155423 A1.

### DISCLOSURE OF INVENTION

The object of the present invention is to provide a transverse bar for tracks of snow groomers, which is free from the drawbacks described above and simple and economical to implement.

According to the present invention, a transverse bar for tracks of snow groomers is provided, the transverse bar comprising a section bar and covering plates fixed to the section bar, which is delimited by an outer surface and comprises a fixing portion to fix it to the belts of a track of a snow groomer and two lateral sides projecting from the fixing portion; wherein the covering plates are arranged along the lateral sides so as to define part of an outer surface of the transverse bar.

In this way, it is possible to select materials for the manufacturing of the plates, which allow for obtaining a smooth surface that minimizes snow adhesion.

In particular, each covering plate is substantially flat and arranged on a flat portion of the section bar so as to facilitate the coupling between the section bar and the covering plates.

In particular, the covering plate is made of a polymer material selected in the group consisting of low-density polyethylene, high-density polyethylene, polyamide, polypropylene, acetal resins, polycarbonate, fluoropolymers (in particular, polytetrafluoroethylene), and derivatives thereof with additives and/or fillers. The materials listed above have proven to be particularly effective in limiting snow adhesion.

### BRIEF DESCRIPTION OF THE DRAWINGS

The present invention will now be described with reference to the accompanying drawings, which illustrate a non-limiting embodiment thereof, in which:
Figure 1 is a schematic side view, with parts removed for clarity, of a preferred embodiment of the snow groomer of the present invention;
Figure 2 is a schematic plan view, with parts removed for clarity, of a detail of the snow groomer of Figure 1;
Figure 3 is a schematic perspective view, with parts removed for clarity, of a detail of Figure 2; and
Figure 4 is a schematic perspective view, with parts removed for clarity, of a variant of the detail of Figure 3.

### BEST MODE FOR CARRYING OUT THE INVENTION

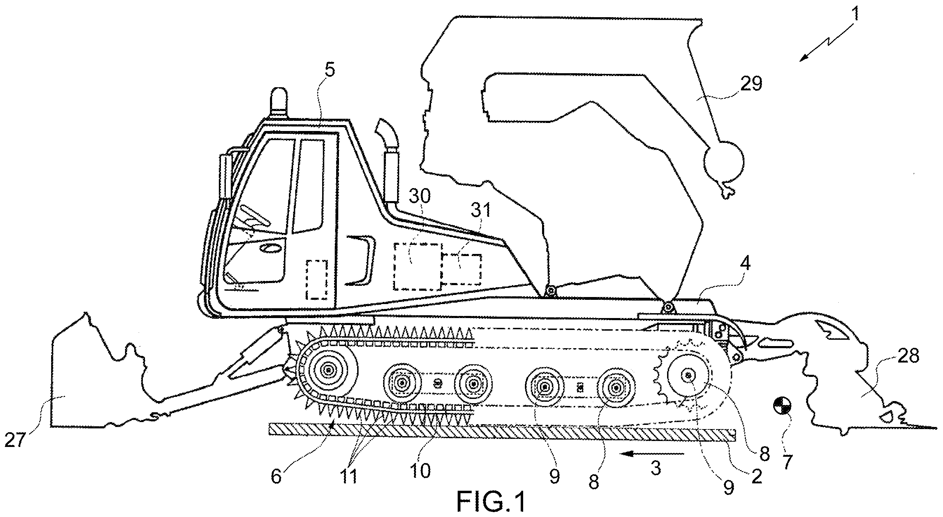

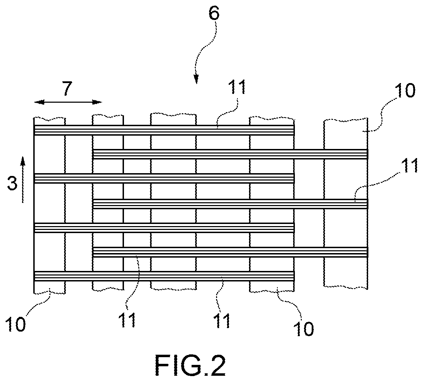

With reference to Figures 1 and 2, the numeral 1 indicates, as a whole, a snow groomer for the preparation of ski slopes 2.

The snow groomer 1 is motorised so as to move along a slope 2 in a forward direction 3, and comprises a support frame 4, a driver's cabin 5 mounted centrally on the frame 4, and two tracks 6 (only one of which is shown in Figure 1) mounted on opposite sides of the frame 4 in a direction 7 transverse to direction 3 and perpendicular to the plane of the sheet of Figure 1.

Each track 6 comprises a set of wheels 8 mounted on the frame 4 so as to rotate about respective rotation axes 9 parallel to direction 7, and a plurality of belts 10 movable in respective vertical containment planes parallel to each other and perpendicular to said direction 7.

Each belt 10 is looped around the front wheel 8 and the rear wheel 8, and has a lower branch, which is kept in contact with the slope 2 by the intermediate wheels 8.

The track 6 also comprises a plurality of transverse bars 11, which are fixed to the respective belts 10 parallel to direction 7, and are configured to allow the gripping of said track 6 to the snow of the ski slope 2.

Each bar 11 comprises a section bar 12, which is preferably, but not necessarily, made of steel, aluminium or aluminium alloy, has a contoured shape, and is bounded by an outer surface 13 having a substantially triangular shape.

The surface 13 comprises a fixing portion 14, which is substantially flat and arranged in contact with a number of belts 10, which depends on the length of the bar 11, and two lateral sides 15, which project from the portion 14, converge with each other, and are connected to one another at an end portion 16 of the section bar 12 opposite the portion 14 itself.

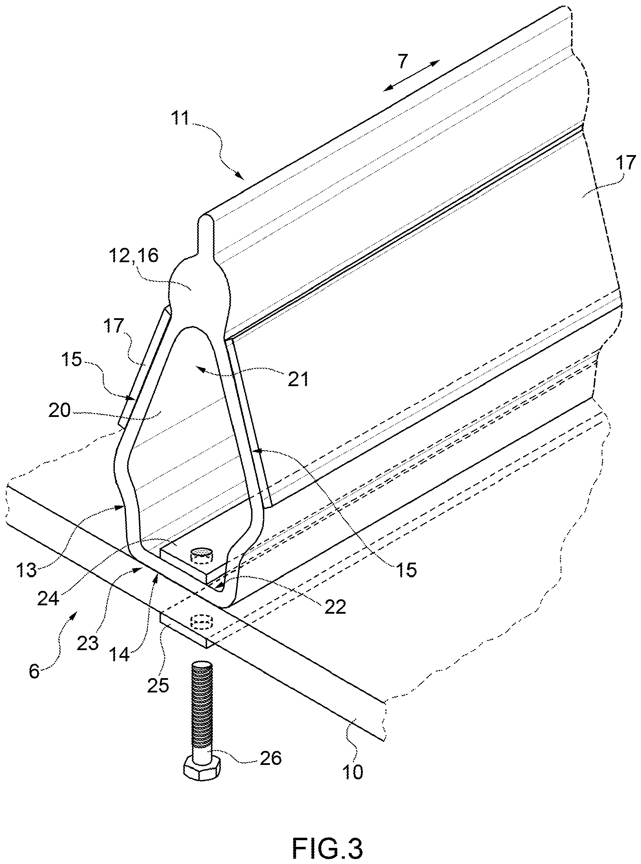

As shown in Figure 3, the bar 11 also comprises, on each side 15, a respective flat covering plate 17 fixed to a corresponding flat portion of the side 15 itself.

The plate 17 is made of a polymer material selected in the group consisting of low-density polyethylene, high-density polyethylene, polyamide, polypropylene, acetal resins, polycarbonate, fluoropolymers (in particular, polytetrafluoroethylene), and derivatives thereof with additives and/or fillers.

In this case, the plate 17 extends along the entire side 15 in direction 7, and has a substantially parallelepiped shape.

The plate 17 has, perpendicular to said direction 7, a rectangular cross section, and also has a thickness at least equal to 0.1 mm.

The plate 17 is fixed to the side 15 by means of gluing and/or fastening screws (not shown) or is directly manufactured through moulding on the side 15 itself.

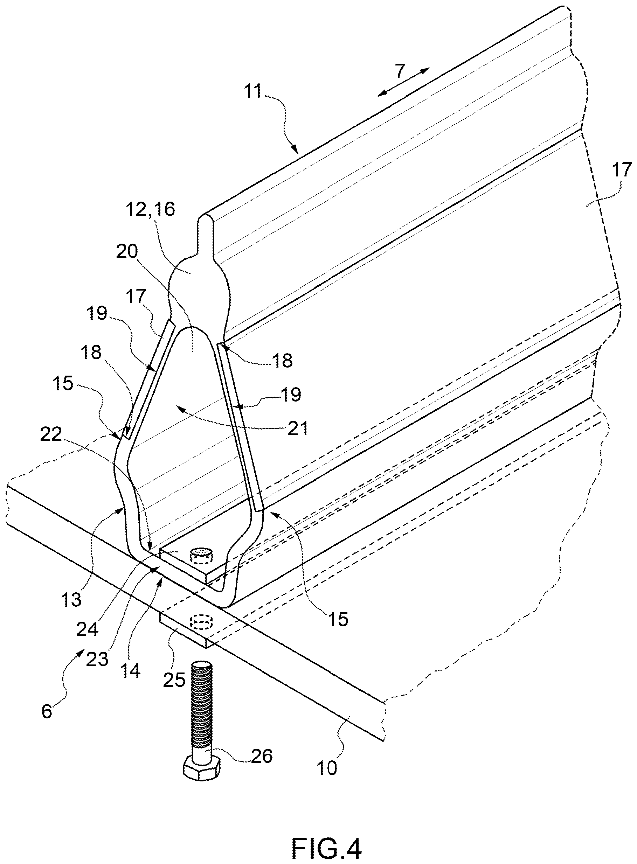

The variant shown in Figure 4 differs from what shown in the preceding figures solely in that, therein, each plate 17 is housed within a respective cavity 18, which is formed on the corresponding side 15 and is bounded by a bottom wall 19 that is substantially flat.

The plate 17 is coplanar with the surface 13 and is fixed within the cavity 18 by means of gluing and/or fastening screws (not shown) or is directly manufactured through moulding within the cavity 18 itself.

According to some variants, not shown:
each plate 17 of at least part of the bars 11 extends only along part of the respective side 15;
each plate 17 has, perpendicular to direction 7, a cross section substantially having the shape of a trapezoid with inclined lateral sides, which facilitate the removal of snow and/or ice from the respective bar 11; and
each cavity 18 has a cross section substantially having the shape of a trapezoid with inclined lateral sides configured so as to lock the respective plate 17 inside said cavity 18 perpendicularly to the respective bottom wall 19.

In connection with the above, it should be pointed out that the plates 17 of each section bar 12 therefore define, both in the embodiment shown in Figure 3 and in the embodiment shown in Figure 4, part of the outer surface of the respective bar 11.

Each bar 11 also has an inner cavity 20, which extends through the section bar 12 in direction 7 and is laterally open in direction 7.

The cavity 20 is bounded by an inner surface 21 comprising a substantially flat coupling portion 22 parallel and opposite to the portion 14 of the surface 13.

The bar 11 is fixed to the respective belts 10 by means of a fixing device 23 comprising, in this case, an inner plate 24 inserted within the cavity 20 in contact with the portion 22, and an outer plate 25 arranged in contact with the respective belts 10 on the opposite side of the section bar 12.

The assembly defined by the plates 24 and 25, the belts 10 and the bar 11 is locked perpendicular to the portions 14 and 22 by a plurality of fastening screws 26 mounted through the plate 25, the belts 10 and the section bar 12 and screwed into the plate 24.

The snow groomer 1 is also provided with a shovel 27 connected to the front of the frame 4 to move snow masses along the slope 2, a milling cutter 28 connected to the rear of the frame 4 for processing the snow of the slope 2, and a winch assembly 29 mounted above the frame 4 itself.

The snow groomer 1 also comprises an internal combustion engine 30 connected with at least one of the front and rear wheels 8, the shovel 27, the milling cutter 28 and the winch assembly 29 by means of a transmission unit 31 of a known type.

The polymeric material used to manufacture the plates 17 allows for obtaining a relatively reduced roughness and a relatively high surface finish. Experimental tests have shown that the polymeric material plates 17 inhibit the adhesion of snow and/or ice to the bars 11.

## Claims

1. A transverse bar for tracks (6) of snow groomers, the transverse bar comprising a section bar (12); and covering plates (17) fixed to the section bar (12), which is delimited by an outer surface (13) and comprises a fixing portion (14) to fix it to the belts (10) of a track (6) of a snow groomer and two lateral sides (15) projecting from the fixing portion (14); wherein the covering plates (17) are arranged along the lateral sides (15) so as to define part of an outer surface of the transverse bar; wherein each covering plate (17) is made of a polymer material selected in the group consisting of low-density polyethylene, high-density polyethylene, polyamide, polypropylene, acetal resins, polycarbonate, fluoropolymers (in particular, polytetrafluoroethylene), and derivatives thereof with additives and/or fillers; and wherein the section bar (12) has an elongated shape and extends in one direction (7); each covering plate (17) having a length, measured parallel to the direction (7), that is substantially equal to a length of the transverse bar (12), which is also measured parallel to the direction (7).

2. The transverse bar according to claim 1, wherein each covering plate (17) is substantially flat and is arranged on a flat portion of the section bar (12).

3. The transverse bar according to any one of the preceding claims, wherein the section bar (12) has an elongated shape and extends in one direction (7); each covering plate (17) having, perpendicularly to the direction (7), a substantially rectangular cross section.

4. The transverse bar according to any one of the claims from 1 to 2, wherein the section bar (12) has an elongated shape and extends in one direction (7); each covering plate (17) having, perpendicularly to the direction (7), a cross section substantially having the shape of a trapezoid with inclined lateral sides.

5. The transverse bar according to any of the preceding claims, wherein each covering plate (17) is fixed to the relative lateral side (15) by means of gluing and/or fastening screws.

6. The transverse bar according to any one of the claims from 1 to 4, wherein each covering plate (17) is manufactured through moulding on the relative lateral side (15) .

7. The transverse bar according to any of the preceding claims, wherein each lateral side (15) has a housing cavity (18), which opens up outwards and is designed to house, on the inside, the relative covering plate (17).

8. The transverse bar according to claim 7, wherein the outer face of the covering plate (17) is substantially coplanar with the outer surface (13) of the section bar (12) .

9. The transverse bar according to any one of the preceding claims, wherein the section bar (12) has an elongated shape, extends in one direction (7) and has an inner cavity (20), which extends through the section bar (12) in the direction (7) and is laterally open in said direction (7).

10. The transverse bar according to any one of the preceding claims, wherein each covering plate (17) has a thickness that is at least equal to 0.1 mm.

11. A snow groomer for the preparation of ski slopes; the snow groomer comprising a support frame (4); a driver's cabin (5) fitted on the support frame (4); and two tracks (6) fitted on opposite sides of the support frame (4); each track (6) comprising a plurality of parallel belts (10) and a plurality of transverse bars (11) according to any one of the preceding claims fixed to the belts (10).

## Patentansprüche

1. Querträger für Ketten (6) von Pistenraupen, wobei der Querträger einen Profilträger (12); und Abdeckplatten (17) umfasst, die an dem Profilträger (12) befestigt sind, der durch eine äußere Oberfläche (13) abgegrenzt ist und einen Befestigungsabschnitt (14) für seine Befestigung an den Riemen (10) einer Kette (6) einer Pistenraupe und zwei seitliche Seiten (15) umfasst, die von dem Befestigungsabschnitt (14) hervorstehen; wobei die Abdeckplatten (17) derart entlang den seitlichen Seiten (15) angebracht sind, dass sie einen Teil einer äußeren Oberfläche des Querträgers bilden; wobei jede Abdeckplatte (17) aus einem Polymermaterial hergestellt ist, das in der Gruppe ausgewählt ist, die aus Polyethylen mit niedriger Dichte, Polyethylen mit hoher Dichte, Polyamid, Polypropylen, Acetalharzen, Polycarbonat, Fluorpolymeren (insbesondere Polytetrafluorethylen) und Derivaten davon mit Zusatzstoffen und/oder Füllstoffen besteht; und wobei der Profilträger (12) eine längliche Form aufweist und sich in eine Richtung (7) erstreckt; jede Abdeckplatte (17) eine Länge aufweist, die, parallel zu der Richtung (7) gemessen, im Wesentlichen gleich einer Länge des Querträgers (12), ebenfalls parallel zu der Richtung (7) gemessen, ist.

2. Querträger nach Anspruch 1, wobei jede Abdeckplatte (17) im Wesentlichen flach ist und auf einem flachen Abschnitt des Profilträgers (12) angebracht ist.

3. Querträger nach einem der vorhergehenden Ansprüche, wobei der Profilträger (12) eine längliche Form aufweist und sich in eine Richtung (7) erstreckt; wobei jede Abdeckplatte (17) senkrecht zu der Richtung (7) einen im Wesentlichen rechtwinkligen Querschnitt aufweist.

4. Querträger nach einem der Ansprüche 1 bis 2, wobei der Profilträger (12) eine längliche Form aufweist und sich in eine Richtung (7) erstreckt; wobei jede Abdeckplatte (17) senkrecht zu der Richtung (7) einen Querschnitt aufweist, der im Wesentlichen die Form eines Trapezes mit geneigten seitlichen Seiten aufweist.

5. Querträger nach einem der vorhergehenden Ansprüche, wobei jede Abdeckplatte (17) mittels Klebens und/oder Befestigungsschrauben an der entsprechenden seitlichen Seite (15) befestigt ist.

6. Querträger nach einem der Ansprüche von 1 bis 4, wobei jede Abdeckplatte (17) durch Formen an der entsprechenden seitlichen Seite (15) hergestellt ist.

7. Querträger nach einem der vorhergehenden Ansprüche, wobei jede seitliche Seite (15) einen Gehäusehohlraum (18) aufweist, der sich nach außen öffnet und so gestaltet ist, dass er auf der Innenseite die entsprechende Abdeckplatte (17) unterbringt.

8. Querträger nach Anspruch 7, wobei die äußere Seite der Abdeckplatte (17) im Wesentlichen koplanar mit der äußeren Oberfläche (13) des Profilträgers (12) ist.

9. Querträger nach einem der vorhergehenden Ansprüche, wobei der Profilträger (12) eine längliche Form aufweist, sich in eine Richtung (7) erstreckt und einen inneren Hohlraum (20) aufweist, der sich durch den Profilträger (12) in der Richtung (7) erstreckt und in der Richtung (7) seitlich offen ist.

10. Querträger nach einem der vorhergehenden Ansprüche, wobei jede Abdeckplatte (17) eine Dicke aufweist, die mindestens gleich 0,1 mm ist.

11. Pistenraupe zur Vorbereitung von Skipisten; wobei die Pistenraupe einen Tragrahmen (4); eine Führerkabine (5), die an dem Tragrahmen (4) montiert ist; und zwei Ketten (6) umfasst, die an entgegengesetzten Seiten des Tragrahmens (4) montiert sind; wobei jede Kette (6) eine Vielzahl von parallelen Riemen (10) und eine Vielzahl von Querträgern (11) nach einem der vorhergehenden Ansprüche umfasst, die an den Riemen (10) befestigt sind.

## Revendications

1. Barre transversale pour chenilles (6) de dameuses, la barre transversale comprenant un profilé (12) ; et des plaques de recouvrement (17) fixées au profilé (12), qui est délimité par une surface extérieure (13) et comprend une portion de fixation (14) pour le fixer aux bandes (10) d'une chenille (6) d'une dameuse et deux côtés latéraux (15) faisant saillie depuis la portion de fixation (14) ; dans laquelle les plaques de recouvrement (17) sont agencées le long des côtés latéraux (15) de manière à définir une partie d'une surface extérieure de la barre transversale ; dans laquelle chaque plaque de recouvrement (17) est constituée d'un matériau polymère sélectionné dans le groupe se composant de polyéthylène basse densité, polyéthylène haute densité, polyamide, polypropylène, résines d'acétal, polycarbonate, fluoropolymères (en particulier, polytétrafluoroéthylène), et des dérivés de ceux-ci avec des additifs et/ou des charges ; et dans laquelle le profilé (12) a une forme allongée et s'étend dans une direction (7) ; chaque plaque de recouvrement (17) ayant une longueur, mesurée parallèlement à la direction (7), qui est sensiblement égale à une longueur de la barre transversale (12), et qui est également mesurée parallèlement à la direction (7).

2. Barre transversale selon la revendication 1, dans laquelle chaque plaque de recouvrement (17) est sensiblement plate et est agencée sur une portion plate du profilé (12).

3. Barre transversale selon l'une quelconque des revendications précédentes, dans laquelle le profilé (12) a une forme allongée et s'étend dans une direction (7) ; chaque plaque de recouvrement (17) ayant, perpendiculairement à la direction (7), une coupe transversale sensiblement rectangulaire.

4. Barre transversale selon l'une quelconque des revendications 1 et 2, dans laquelle le profilé (12) a une forme allongée et s'étend dans une direction (7) ; chaque plaque de recouvrement (17) ayant, perpendiculairement à la direction (7), une coupe transversale ayant sensiblement la forme d'un trapèze avec des côtés latéraux inclinés.

5. Barre transversale selon l'une quelconque des revendications précédentes, dans laquelle chaque plaque de recouvrement (17) est fixée au côté latéral relatif (15) au moyen de colle et/ou de vis de serrage.

6. Barre transversale selon l'une quelconque des revendications 1 à 4, dans laquelle chaque plaque de recouvrement (17) est fabriquée par moulage sur le côté latéral relatif (15).

7. Barre transversale selon l'une quelconque des revendications précédentes, dans laquelle chaque côté latéral (15) a une cavité de logement (18), qui s'ouvre vers l'extérieur et qui est conçue pour loger, à l'intérieur, la plaque de recouvrement relative (17).

8. Barre transversale selon la revendication 7, dans laquelle la face extérieure de la plaque de recouvrement (17) est sensiblement coplanaire avec la surface extérieure (13) du profilé (12).

9. Barre transversale selon l'une quelconque des revendications précédentes, dans laquelle le profilé (12) a une forme allongée, s'étend dans une direction (7) et a une cavité intérieure (20), qui s'étend à travers le profilé (12) dans la direction (7) et est latéralement ouverte dans ladite direction (7).

10. Barre transversale selon l'une quelconque des revendications précédentes, dans laquelle chaque plaque de recouvrement (17) a une épaisseur qui est au moins égale à 0,1 mm.

11. Dameuse pour la préparation de pistes de ski ; la dameuse comprenant un châssis de support (4) ; une cabine de conducteur (5) ajustée sur le châssis de support (4) ; et deux chenilles (6) ajustées sur des côtés opposés du châssis de support (4) ; chaque chenille (6) comprenant une pluralité de bandes parallèles (10) et une pluralité de barres transversales (11) selon l'une quelconque des revendications précédentes fixées aux bandes (10).
